Europäisches Patentamt

European Patent Office

Office européen des brevets

(19)

(11) EP 0 549 442 B1

(12) **FASCICULE DE BREVET EUROPEEN**

(45) Date de publication et mention
de la délivrance du brevet:
**13.03.1996 Bulletin 1996/11**

(51) Int Cl.⁶: **G01J 3/46**

(21) Numéro de dépôt: **92403479.6**

(22) Date de dépôt: **21.12.1992**

(54) **Procédé et dispositif de détermination de la couleur d'un objet translucide, tel qu'une dent**

Verfahren und Vorrichtung zur Bestimmung der Farbe eines durchscheinenden Gegenstandes, zum Beispiel eines Zahnes

Method and device for determining the colour of a translucent object, such as a tooth

(84) Etats contractants désignés:
**AT BE CH DE DK ES FR GB GR IE IT LI NL PT SE**

(30) Priorité: **23.12.1991 FR 9115984**

(43) Date de publication de la demande:
**30.06.1993 Bulletin 1993/26**

(73) Titulaire: **BERTIN & CIE**
**F-78373 Plaisir Cédex (FR)**

(72) Inventeur: **Vieillefosse, Michel Louis**
**F-13090 Aix en Provence (FR)**

(74) Mandataire: **Ramey, Daniel et al**
**Cabinet Ores**
**6 Avenue de Messine**
**F-75008 Paris (FR)**

(56) Documents cités:
**EP-A- 0 360 657        WO-A-86/03292**
**US-A- 3 986 777        US-A- 4 654 794**

## Description

L'invention concerne un procédé et un dispositif de détermination de la couleur d'un objet translucide, en particulier d'un objet tel qu'une dent en bouche, à partir de la réflectance de cet objet éclairé par une source lumineuse polychromatique.

Les procédés actuels de détermination de la couleur d'un objet sont basés sur la mesure de la réflectance spectrale de l'objet éclairé par une source de lumière polychromatique et sur la détermination des composantes trichromatiques X, Y, Z ou L*, a*, b* pour des illuminants déterminés. Un tel procédé est divulgué par le document EP-A-0 360 657.

On obtient cependant des résultats qui ne sont en général pas satisfaisants lorsqu'on applique ces procédés à la détermination de la couleur d'un objet translucide, ce qui est le cas d'une dent en bouche.

La restitution d'une couleur au moyen des composantes trichromatiques est par principe peu fiable aux longueurs d'onde qui correspondent aux transitions entre les couleurs primaires, c'est-à-dire au voisinage des longueurs d'onde des intersections des courbes des coefficients de distribution $\bar{x}$ $\bar{y}$ $\bar{z}$ de l'observateur de référence colorimétrique C.I.E. : c'est en effet à ces longueurs d'onde que l'oeil humain perçoit les plus grandes différences de teinte pour une variation donnée de la longueur d'onde.

Les dents présentent de plus des dispersions de teintes importantes au voisinage de ces longueurs d'onde, ce qui explique déjà les mauvais résultats des procédés connus. Le caractère translucide des dents est un facteur supplémentaire d'erreur, car des dents apparemment très blanches peuvent avoir un coefficient de réflexion de la lumière deux fois plus faible que des dents de teinte plus jaune ou plus marron, ce qui modifie la réflectance spectrale et amène à des conclusions erronées.

L'invention a pour objet un procédé et un dispositif permettant de déterminer de façon sûre la couleur d'une dent en tenant compte de sa transparence ou translucidité, notamment en vue de la fabrication d'une prothèse dentaire de même couleur.

L'invention a également pour objet, de façon plus générale, un procédé et un dispositif permettant de déterminer sans risque d'erreurs la couleur d'un objet translucide.

L'invention propose, à cet effet, un procédé de détermination de la couleur d'un objet translucide, tel par exemple qu'une dent en bouche, à partir de la réflectance de cet objet éclairé par une source lumineuse polychromatique, caractérisé en ce qu'il consiste à mesurer la réflectance de l'objet à des longueurs d'onde correspondant essentiellement aux maxima de sensibilité de l'oeil humain en teinte et en saturation, et à déduire de ces mesures de réflectance un indicateur de restitution de transparence de l'objet, ainsi qu'un coefficient de saturation de la couleur de l'objet vue par l'oeil humain et les pigmentations de cette couleur par rapport au blanc dans des intervalles prédéterminés de longueurs d'onde.

L'invention n'est donc pas basée sur la détermination des composantes trichromatiques de la couleur de l'objet pour un ou plusieurs illuminants déterminés, mais sur la détermination de la saturation de la couleur de l'objet, vue par l'oeil humain et en tenant compte de la transparence de l'objet, et des pigmentations de cette couleur par rapport au blanc.

L'indicateur de restitution de transparence de l'objet est obtenu par détermination de la luminance d'un objet blanc incluse dans la luminance de l'objet éclairé par un illuminant déterminé. On en déduit le pourcentage de saturation de la couleur de l'objet par le rapport de cette luminance incluse et de la luminance totale de l'objet, vues par l'oeil humain.

Les pigmentations de la couleur de l'objet sont définies par les différences de sa luminance et de la luminance incluse d'un objet blanc, vues par l'oeil humain pour un illuminant déterminé, sur des intervalles déterminés de longueurs d'onde.

On peut ainsi, dans le cas des dents, déterminer la pigmentation jaune ou jaune-rouge d'une dent et sa pigmentation bleu-vert pour un illuminant déterminé, qui est alors de préférence l'éclairement diffus normalisé de la lumière solaire.

Toujours dans le cas des dents, les mesures de réflectance sont réalisées à des longueurs d'onde sensiblement égales à 440, 495, 520, 577 et 600 nm.

Les longueurs d'onde de 495 et 600 nm correspondent aux maxima de sensibilité de l'oeil en teinte, et la longueur d'onde de 577 nm correspond au maximum de sensibilité de l'oeil en saturation.

Pour la détermination de la couleur à donner à une prothèse dentaire, le procédé selon l'invention consiste également à comparer la couleur ainsi déterminée de la dent à des couleurs connues d'un teintier, en comparant d'abord le pourcentage de saturation de la couleur de la dent au pourcentage de saturation correspondant des couleurs du teintier, puis les pigmentations de la couleur de la dent aux pigmentations correspondantes des couleurs du teintier.

On compare ensuite la luminance d'un objet blanc incluse dans la luminance de la dent aux luminances d'un objet blanc incluses dans les luminances des couleurs du teintier

Ces dispositions sont bien entendu applicables à la détermination des couleurs d'objets translucides autres que des dents.

L'invention propose également un dispositif de détermination de la couleur d'un objet translucide, tel par exemple qu'une dent en bouche, ce dispositif comprenant une source lumineuse polychromatique associée à un système optique pour l'éclairage de l'objet, un système optique de reprise de la lumière diffusée par l'objet, un spectromètre recevant cette lumière, des photodétecteurs agencés en sortie du spectromètre et un convertisseur analogique-numérique reliant les photodétecteurs à un système de traitement de l'information tel qu'un micro-ordinateur , ce dispositif étant caractérisé en ce que le spectromètre et les photodétecteurs sont destinés à détecter la réflectance de l'objet à des longueurs d'onde correspondant essentiellement aux maxima de sensibilité de l'oeil humain en teinte et en saturation, et en ce que le système de traitement de l'information est programmé pour déterminer, à partir de ces mesures de réflectance, un indicateur de restitution de transparence de l'objet ainsi qu'un pourcentage de saturation de la couleur de l'objet vue par l'oeil humain, et les pigmentations de cette couleur par rapport au blanc dans des intervalles prédéterminés de longueurs d'onde.

Le spectromètre et les photodétecteurs sont destinés à détecter la réflectance de l'objet à des longueurs d'onde sensiblement égales à 495, 577 et 600 nm, ainsi qu'à 440 et 520 nm en particulier dans le cas des dents.

Le système de traitement de l'information est programmé pour déterminer le coefficient de saturation et les pigmentations de la couleur de l'objet par rapport au blanc pour un illuminant standard déterminé, tel que l'éclairement diffus normalisé de la lumière solaire dans le cas des dents.

Des valeurs de pourcentages de saturation, de pigmentations et de luminances de blanc des couleurs d'un teintier, mesurées dans les mêmes conditions que la couleur de l'objet, sont enregistrées dans une mémoire du système de traitement de l'information, celui-ci étant programmé pour comparer séquentiellement et dans l'ordre le coefficient de saturation de la couleur de l'objet aux coefficients de saturation enregistrés dans la mémoire, puis les pigmentations et enfin les luminances de blanc, afin de déterminer la couleur du teintier qui est la plus proche de la couleur de l'objet, ou les pigments à ajouter à une couleur déterminée pour obtenir la couleur d'un objet.

Dans le cas des dents, on détermine ainsi la couleur à donner à une prothèse dentaire pour que celle-ci , bien que non translucide, ait une couleur sensiblement identique à celle d'une dent adjacente dans la bouche du patient.

L'invention sera mieux comprise et d'autres caractéristiques, détails et avantages de celle-ci apparaitront plus clairement à la lecture de la description qui suit, faite à titre d'exemple en référence aux dessins annexés dans lesquels :

la figure 1 est un graphe représentant la courbe de variation de l'efficacité relative de l'oeil humain en fonction de la longueur d'onde;
la figure 2 est un graphe représentant schématiquement une courbe de variation de la réflectance d'une dent vue par l'oeil humain en fonction de la longueur d'onde;
la figure 3 est un graphe représentant schématiquement la variation de la luminance d'une dent éclairée par un illuminant standard et vue par l'oeil humain,

en fonction de la longueur d'onde,
la figure 4 est un organigramme représentant schématiquement les opérations essentielles du procédé selon l'invention;
la figure 5 représente schématiquement les composants essentiels, sous forme de schéma-blocs, d'un dispositif selon l'invention.

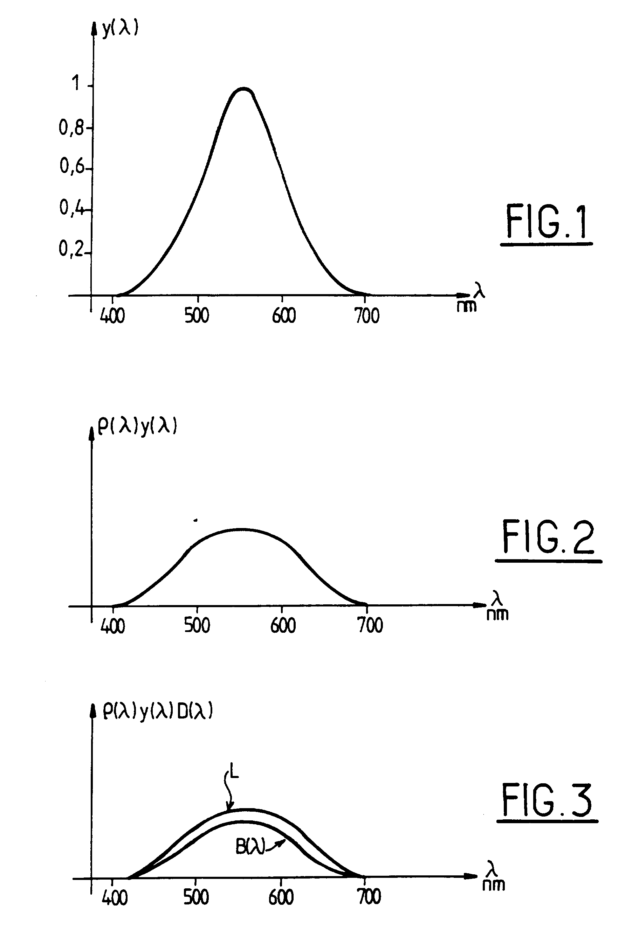

La figure 1 représente schématiquement la courbe de variation de l'efficacité relative de l'oeil humain en fonction de la longueur d'onde, cette efficacité relative étant nulle en dehors de l'intervalle 400-700 nm et maximale pour la longueur d'onde de 555 nm.

Lorsqu'un objet coloré éclairé par une lumière polychromatique est vu par l'oeil humain, la courbe de sa réflectance spectrale diffuse est modifiée par l'efficacité relative de l'oeil humain, et l'on obtient une courbe qui est du type de celle représentée en figure 2 (dans le cas d'une dent) où $\rho(\lambda)$ est la réflectance de la dent et $y(\lambda)$ est l'efficacité relative de l'oeil humain.

Lorsque la dent (ou l'objet) est éclairée par un illuminant tel que l'éclairement diffus normalisé $D(\lambda)$ de la lumière solaire, la variation de sa luminance vue par l'oeil humain, soit la quantité $\rho(\lambda)\, y(\lambda)\, D(\lambda)$ est représentée en fonction de la longueur d'onde par la courbe L de la figure 3. Dans cette figure, la courbe $B(\lambda)$ correspond à la luminance de blanc incluse dans la luminance de l'objet observé et vue par l'oeil humain, et les différences entre les deux courbes L et $B(\lambda)$ permettent conformément à l'invention de déterminer les pigmentations par rapport au blanc de la couleur de la dent ou de l'objet observé, comme cela sera décrit plus en détail ci-dessous.

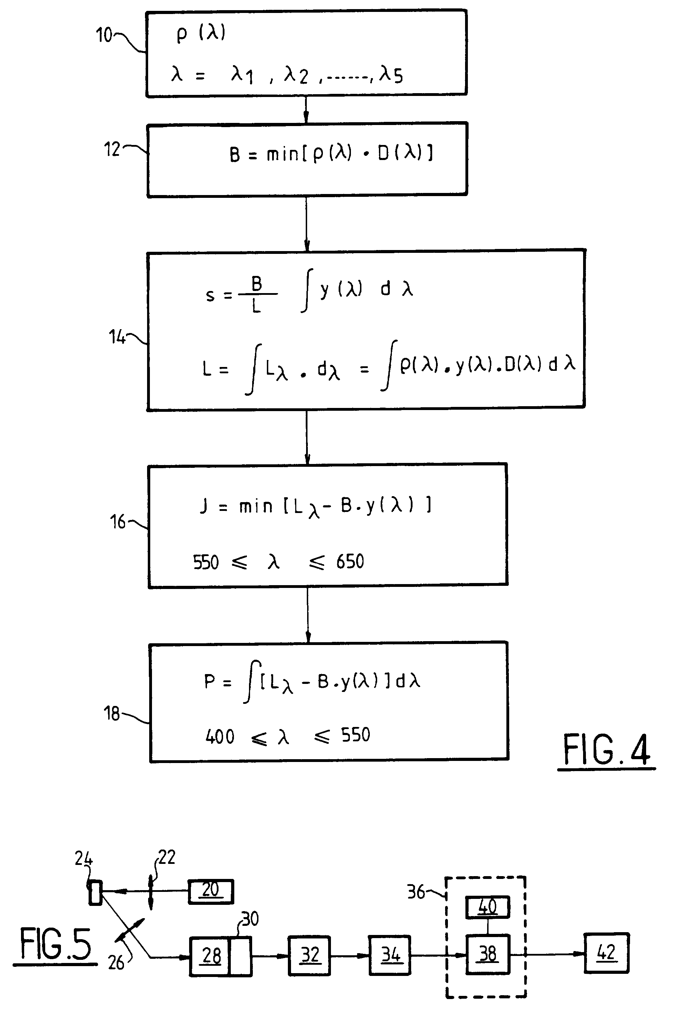

On a représenté en figure 4 les principales opérations du procédé selon l'invention, dans le cas de la détermination de la couleur d'une dent.

La première étape, indiquée en 10, consiste à mesurer la réflectance $\rho(\lambda)$ d'une dent éclairée par une lumière polychromatique quelconque qui peut être par exemple sensiblement équi-énergétique. Les mesures de cette réflectance sont faites pour quelques valeurs de longueurs d'onde bien déterminées, qui sont de 440, 495, 520, 577 et 600 nm. Les longueurs d'onde de 495 et 600 nm correspondent aux maxima de sensibilité en teinte de l'oeil humain. La longueur d'onde de 577 nm correspond au maximum de cette sensibilité en saturation. La longueur d'onde de 440 nm est celle où l'on constate les plus grandes différences de teintes sur les dents. La longueur d'onde de 520 nm correspond sensiblement à l'intersection des courbes des coefficients $\bar{x}$ et $\bar{z}$ de l'observateur de référence colorimétrique C.I.E., la valeur de 495 nm correspondant par ailleurs à l'intersection des courbes des coefficients $\bar{y}$ et $\bar{z}$ et celle de 577 nm correspondant approximativement à l'intersection des courbes des coefficients $\bar{x}$ et $\bar{y}$ .

A partir de ces cinq mesures de réflectance, on détermine, dans l'étape 12, la luminance d'un objet blanc qui est incluse dans la luminance de la dent. Cette luminance de blanc, notée B, est obtenue par le minimum du produit $\rho(\lambda).D(\lambda)$, $D(\lambda)$ étant l'éclairement diffus normalisé de la lumière solaire. Cet éclairement est choisi de préférence à un autre illuminant standard, du fait que l'on a tendance à privilégier la lumière du jour pour la détermination de la couleur d'une prothèse dentaire, et que les surfaces visibles des dents en bouche sont approximativement verticales et sont éclairées par la lumière solaire diffuse, et non par la lumière solaire directe.

Lorsque le procédé selon l'invention est appliqué à la détermination de la couleur d'un objet translucide horizontal, on peut utiliser comme illuminant standard l'éclairement direct normalisé de la lumière solaire.

L'importance relative de la luminance de blanc incluse dans la luminance totale de la dent correspond à un facteur de restitution de transparence de cette dent, qui va varier en fonction du coefficient de réflexion de la dent.

L'étape suivant 14 du procédé consiste à déterminer le coefficient de la saturation de la couleur de la dent vue par l'oeil humain, ce coefficient de saturation étant obtenu à partir du rapport de la luminance de blanc B et de la luminance totale L de la dent, par la formule suivante :

$$s = \frac{B}{L} \int y(\lambda)\, d\lambda$$

avec :

$$L = \int L_\lambda \, . \, d\lambda = \int \rho(\lambda) \, . \, y(\lambda) \, . \, D(\lambda) \, d\lambda$$

$L_\lambda$ étant la luminance effective vue par l'oeil à une longueur d'onde donnée.

L'étape suivante 16 du procédé selon l'invention consiste à déterminer la pigmentation jaune, ou jaune-rouge, de la couleur de la dent par rapport au blanc, vue par l'oeil humain. On utilise pour cela la formule :

$$J = \min\,[\, L_\lambda - B.y(\lambda)\,]$$

la longueur d'onde étant comprise entre 550 et 650 nm environ.

Cette pigmentation correspond au minimum de la différence entre les parties droites des courbes L et $B(\lambda)$ de la figure 3.

On détermine également, comme indiqué en 18, la pigmentation bleu-vert de la dent par rapport au blanc, cette pigmentation P étant donnée par la formule suivante :

$$P = \int\,[\, L_\lambda - B.y(\lambda)\,]\, d\lambda$$

avec $\lambda$ compris entre 400 et 550 nm environ.

Cette pigmentation correspond à la différence entre les parties gauches des courbes L et $B(\lambda)$ de la figure 3.

Le procédé selon l'invention est mis en oeuvre au moyen d'un dispositif tel que celui représenté en figure 5, qui comprend une source 20 de lumière polychromatique associée à un système optique 22 pour l'éclairage d'un objet 24 tel qu'une dent en bouche. La lumière diffusée par la surface de l'objet 24 est reprise par un système optique 26 et transmise à un spectromètre 28 à la sortie duquel sont placés des photodétecteurs 30, tels par exemple qu'une ou des barrettes de photodiodes au silicium.

Des circuits d'amplification 32 relient les sorties des photodétecteurs 30 à un convertisseur analogique-numérique 34, dont la sortie est reliée à une entrée d'un système 36 de traitement de l'information, du type micro-ordinateur par exemple, comprenant un micro-processeur 38 associé à des mémoires 40 et à une unité périphérique de sortie 42 telle qu'une imprimante et/ou un écran de visualisation.

De façon classique, les mesures de réflectance sur des objets 24 ou des dents sont effectuées en alternance avec des mesures de calibrage réalisées sur un échantillon de référence, tel qu'une céramique de réflectance spectrale étalonnée. On obtient alors la réflectance $\rho(\lambda)$ de l'objet ou de la dent par la formule suivante :

$$\rho(\lambda) = \rho_m(\lambda) \, . \, r(\lambda)/r_m(\lambda)$$

avec :

| | |
|---|---|
| $\rho_m(\lambda) =$ | réflectance mesurée de l'objet ou de la dent |
| $r(\lambda) =$ | réflectance de l'échantillon |
| $r_m(\lambda) =$ | réflectance mesurée de l'échantillon. |

Une des mémoires 40 du système 36 de traitement de l'information contient un logiciel ou un programme dont l'organigramme est représenté en figure 4, pour effectuer les mesures des réflectances de l'objet ou de la dent aux cinq longueurs d'onde précitées, et calculer les quantités B, s, J et P.

Dans le cas de la détermination de la couleur à donner à une prothèse dentaire, on a également enregistré dans une mémoire 40 du système 36 de traitement de l'information des valeurs de ces quantités B, s, J et P mesurées dans les mêmes conditions sur les échantillons de couleurs d'un teintier fourni par un fabricant.

Le logiciel ou programme enregistré dans les mémoires du système de traitement de l'information permet alors de déterminer la couleur du teintier qui sera la plus proche de celle de la dent, en comparant successivement et dans l'ordre, les quantités s, puis J et P, puis B qui ont été mesurées pour la dent à celles qui ont été mesurées sur les couleurs du teintier.

L'invention est applicable à -la détermination des couleurs d'objets translucides autres que des dents, soit sans modification, soit en modifiant éventuellement la valeur d'une ou de deux longueurs d'onde auxquelles on mesure la réflectance, l'illuminant standard pour lequel on détermine le pourcentage de saturation et les pigmentations de la couleur par rapport au blanc, et les intervalles de longueurs d'onde sur lesquels on détermine les pigmentations. Ces modifications sont à la portée de l'homme du métier, en fonction des natures des objets translucides et de leurs couleurs.

## Revendications

1. Procédé de détermination de la couleur d'un objet translucide, tel par exemple qu'une dent en bouche, à partir de la réflectance de cet objet éclairé par une source de lumière polychromatique, caractérisé en ce qu'il consiste à mesurer la réflectance de l'objet à des longueurs d'onde correspondant essentiellement aux maxima de sensibilité de l'oeil humain en teinte et en saturation, et à déduire de ces mesures de réflectance un indicateur de restitution de transparence de l'objet, ainsi qu'un coefficient de saturation de la couleur de l'objet vue par l'oeil humain et les pigmentations de cette couleur par rapport au blanc dans des intervalles prédéterminés de longueurs d'onde.

2. Procédé selon la revendication 1, caractérisé en ce qu'il consiste à déterminer la luminance d'un objet blanc incluse dans la luminance de l'objet éclairé par un illuminant déterminé et à en déduire le pourcentage de saturation de cette couleur par le rapport de cette luminance incluse et de la luminance totale de l'objet, vues par l'oeil humain.

3. Procédé selon la revendication 1 ou 2, caractérisé en ce qu'il consiste à déterminer les pigmentations de la couleur de l'objet par les différences de sa luminance et de la luminance incluse d'un objet blanc, vues par l'oeil humain pour un illuminant déterminé, sur des intervalles déterminés de longueurs d'onde.

4. Procédé selon la revendication 2 ou 3, caractérisé en ce que cet illuminant est l'éclairement diffus normalisé de la lumière solaire, en particulier lorsque l'objet est une dent en bouche.

5. Procédé selon l'une des revendications précédentes, caractérisé en ce qu'il consiste à mesurer la réflectance de l'objet à des longueurs d'onde sensiblement égales à 440, 495, 520, 577 et 600 nm.

6. Procédé selon l'une des revendications précédentes, caractérisé en ce qu'il consiste à déterminer les pigmentations de la couleur de l'objet par rapport au blanc dans des intervalles de longueurs d'onde compris respectivement entre environ 400 et 550 nm et entre environ 550 et 650 nm.

7. Procédé selon l'une des revendications précédentes, caractérisé en ce qu'il consiste à comparer la couleur ainsi déterminée de l'objet à des couleurs connues d'un teintier, en comparant d'abord le pourcentage de saturation de la couleur de l'objet aux pourcentage de saturation correspondants des couleurs du teintier, puis les pigmentations de la couleur de l'objet aux pigmentations correspondantes des couleurs du teintier, puis la luminance d'un objet blanc incluse dans la luminance de l'objet aux luminances d'un objet blanc incluses dans les luminances des couleurs du teintier.

8. Dispositif de détermination de la couleur d'un objet translucide, tel par exemple qu'une dent en bouche, comprenant une source (20) de lumière polychromatique associée à un système optique (22) pour l'éclairage de l'objet (24), un système optique (26) de reprise de la lumière diffusée par l'objet, un spectromètre (28) recevant cette lumière, des photodétecteurs (30) agencés en sortie du spectromètre, et un convertisseur analogique-numérique (34) reliant les photodétecteurs à un système (36) de traitement de l'information tel qu'un micro-ordinateur, caractérisé en ce que le spectromètre et les photodétecteurs sont destinés à détecter la réflectance de l'objet (24) à des longueurs d'onde correspondant essentiellement aux maxima de sensibilité de l'oeil humain en teinte et en saturation, et en ce que le système (36) de traitement de l'information a des moyens pour déterminer, à partir de ces mesures de réflectance, un indicateur de restitution de transparence de l'objet (24) ainsi qu'un pourcentage de saturation de sa couleur vue par l'oeil humain et les pigmentations de cette couleur par rapport au blanc dans des intervalles prédéterminés de longueurs d'onde.

9. Dispositif selon la revendication 8, caractérisé en ce que le spectromètre (28) et les photodétecteurs (30) sont destinés à détecter la réflectance de l'objet (24) à des longueurs d'onde sensiblement égales à 440, 495, 520, 577 et 600 nm.

10. Dispositif selon la revendication 8 ou 9, caractérisé en ce que le système (36) de traitement de l'information a des moyens pour déterminer le pourcentage de saturation de la couleur de l'objet et les pigmentations de cette couleur par rapport au blanc pour un illuminant standard déterminé, tel que l'éclairement diffus normalisé de la lumière solaire.

11. Dispositif selon l'une des revendications 8 à 10, caractérisé en ce que des valeurs de pourcentage de saturation, de pigmentation et de luminance de blanc des couleurs d'un teintier, mesurées dans les mêmes conditions que la couleur de l'objet, sont enregistrées dans une mémoire (40) du système de traitement de l'information, celui-ci ayant des moyens pour comparer séquentiellement et dans l'ordre le pourcentage de saturation de la couleur de l'objet aux pourcentages de saturation des couleurs du teintier enregistrés dans la mémoire, puis les pigmentations et enfin les luminances de blanc, afin de déterminer la couleur du teintier qui est la plus proche de la couleur de l'objet, ou les pigments à ajouter à une couleur déterminée pour obtenir la couleur de l'objet.

**Patentansprüche**

1. Verfahren zum Bestimmen der Farbe eines transparenten Objektes, zum Beispiel einer Zahnfüllung, ausgehend von dem Reflexionsvermögen dieses Objektes, welches mit einer polychromatischen Lichtquelle beleuchtet wird, **dadurch gekennzeichnet, daß** es das Messen des Reflexionsvermögens des Objektes bei Wellenlängen, die im wesentlichen den maximalen Empfindlichkeiten des menschlichen Auges in bezug auf Farbton und Sättigung entsprechen, und aus diesen Messungen des Reflexionsvermögens das Ermitteln eines Indikators für die Wiederherstellung der Transparenz des Objektes, sowie eines Sättigungsgrades für die Farbe des von dem menschlichen Auge gesehenen Objektes und die Pigmentierungen dieser Farbe im Verhältnis zu weiß in vorgegebenen Wellenlängenintervallen aufweist.

2. Verfahren nach Anspruch 1, **dadurch gekennzeichnet, daß** es das Bestimmen der Leuchtdichte eines weißen Objektes, welche in der Leuchtdichte des mit einem bestimmten Licht beleuchteten Objektes eingeschlossen ist, und das Ermitteln des Sättigungsgrades dieser Farbe im Verhältnis zu dieser eingeschlossenen Leuchtdichte und der gesamten Leuchtdichte des von dem menschlichen Auge gesehenen Objektes aufweist.

3. Verfahren nach Anspruch 1 oder 2, **dadurch gekennzeichnet, daß** es das Bestimmen der Pigmentierung der Farbe des Objektes durch die Unterschiede zwischen dessen Leuchtdichte und der eingeschlossenen Leuchtdichte eines weißen Objektes aufweist, welches von einem menschlichen Auge bei einer vorbestimmten Beleuchtung in vorbestimmten Wellenlängenintervallen gesehen wird.

4. Verfahren nach Anspruch 2 oder 3, **dadurch gekennzeichnet, daß** die Beleuchtung normalisiertes diffuses Sonnenlicht ist, insbesondere wenn das Objekt eine Zahnfüllung ist.

5. Verfahren nach einem der vorigen Ansprüche, **dadurch gekennzeichnet, daß** es das Messen des Reflexionsvermögens des Objektes bei Wellenlängen von ca. 440, 495, 520, 577 und 600 nm aufweist.

6. Verfahren nach einem der vorigen Ansprüche, **dadurch gekennzeichnet**, **daß** es das Bestimmen der Pigmentierungen der Farbe des Objektes im Verhältnis zu weiß in den Wellenlängenintervallen von ca. 400 bis 550 nm und von ca. 550 bis 650 nm aufweist.

7. Verfahren nach einem der vorigen Ansprüche, **dadurch gekennzeichnet, daß** es das Vergleichen der so bestimmten Farbe des Objektes mit bekannten Farben einer Farbpalette aufweist, in dem vorerst der Sättigungsgrad der Farbe des Objektes mit entsprechenden Sättigungsgraden der Farben der Farbpalette verglichen wird, wonach die Pigmentierungen der Farbe des Objektes mit den entsprechenden Pigmentierungen der Farbe der Farbpalette verglichen werden, wonach die Leuchtdichte eines in der Leuchtdichte des Objektes eingeschlossenen weißen Objektes mit Leuchtdichten eines in den Leuchtdichten der Farben der Farbpalette eingeschlossenen weißen Objektes verglichen wird.

8. Vorrichtung zum Bestimmen der Farbe eines transparenten Objektes, wie zum Beispiel eine Zahnfüllung, die aufweist: eine Quelle (20) für polychromatisches Licht, die einem optischen System (22) zum Beleuchten des Objektes (24) zugeordnet ist, ein optisches System (26) zum Aufnehmen des von dem Objekt diffundierten Lichtes, ein Spektrometer (28) zur Aufnahme dieses Lichtes, Photodetektoren (30), die am Ausgang des Spektrometers angeordnet sind, und einen Analog/Digitalumsetzer (34), der die Photodetektoren mit einem Informationsverarbeitungssystem (34), wie einem Mikrorechner, verbindet, **dadurch gekennzeichnet, daß** das Spektrometer und die Photodetektoren dazu bestimmt sind, den Reflexionsgrad des Objektes (24) bei Wellenlängen zu bestimmten, die im wesentlichen den Empfindlichkeitsmaxima des menschlichen Auges in bezug auf Färbung und Sättigung entsprechen, **und daß** das Informationsverarbeitungssystem (36) Mittel zum Bestimmen eines Indikators für die Wiederherstellung der Transparenz des Objektes (24) aus diesen Messungen des Reflexionsgrades, sowie eines Sättigungsgrades dieser Farbe, die von dem menschlichen Auge gesehen wird, und der Pigmentierungen dieser Farbe im Vergleich zu weiß in vorbestimmten Wellenlängenintervallen aufweist.

9. Vorrichtung nach Anspruch 8, **dadurch gekennzeichnet, daß** das Spektrometer (28) und die Photodetektoren (30) zum Feststellen eines Reflexionsgrades des Objektes (24) bei Wellenlängen von ca. 440, 495, 520, 577 und 600nm eingerichtet sind.

10. Vorrichtung nach Anspruch 8 oder 9, **dadurch gekennzeichnet, daß** das Informationsverarbeitungssystem (36) Mittel zum Bestimmen des Sättigungsgrades der Farbe des Objektes und der Pigmentierungen dieser Farbe im Vergleich zu weiß für eine vorgegebene Standardbeleuchtung, wie ein normalisiertes diffuses Sonnenlicht, aufweist.

**11.** Vorrichtung nach einem der Ansprüche 8 bis 10, **dadurch gekennzeichneit**, **daß** die Werte für die Sättigungsgrade, der Pigmentierung und der Weiß-Leuchtdichte der Farben einer Farbpalette, die unter denselben Bedingungen wie die Farbe des Objektes gemessen wurden, in einem Speicher (40) des Informationsverarbeitungssystems abgelegt sind, welches Mittel zum sequentiellen Vergleichen des Sättigungsgrades der Farbe des Objektes mit Sättigungsgraden der in dem Speicher enthaltenen Farben der Farbpalette, danach der Pigmentierungen und abschließend der Leuchtdichten von weiß aufweist, um die Farbe der Farbpalette zu bestimmten, die der Farbe des Objektes am nächsten ist, oder die einer bestimmten Farbe hinzuzufügenden Pigmente zu ermitteln, um die Farbe des Objektes zu erhalten.

**Claims**

**1.** A method of determining the color of a translucent object, such as a tooth in the mouth, for example, on the basis of the reflectance of said object illuminated by a polychromatic light source, the method being characterized in that it consists in measuring the reflectance of the object at wavelengths corresponding essentially to sensitivity maxima of the human eye to hue and to saturation, and in deducing from said reflectance measurements an indicator for restituting the transparency of the object, together with a color saturation coefficient of the object as seen by the human eye and the pigmentations of said color relative to white in predetermined wavelength ranges.

**2.** A method according to claim 1, characterized in that it consists in determining the luminance of a white object included in the luminance of the object illuminated by a determined illuminant and in deducing the saturation percentage of said color by the ratio of said included luminance divided by the total luminance of the object as seen by the human eye.

**3.** A method according to claim 1 or 2, characterized in that it consists in determining the pigmentations of the color of the object from the differences of its luminance and the included luminance of a white object as seen by the human eye for a determined illuminant, over determined wavelength ranges.

**4.** A method according to claim 2 or 3, characterized in that said illuminant is standardized diffuse illumination of sunlight, in particular when the object is a tooth in the mouth.

**5.** A method according to any preceding claim, characterized in that it consists in measuring the reflectance of the object at wavelengths substantially equal to 440 nm, 495 nm, 520 nm, 577 nm, and 600 nm.

**6.** A method according to any preceding claim, characterized in that it consists in determining the pigmentations of the color of the object relative to white in wavelength ranges lying respectively between about 400 nm and about 550 nm and between about 550 nm and about 650 nm.

**7.** A method according to any preceding claim, characterized in that it consists in comparing the color of the object as determined in this way with known colors of a palette, initially by comparing the saturation percentage of the object color with the corresponding saturation percentages of the colors of the palette, then by comparing the pigmentations of the object color with the corresponding pigmentations of the colors of the palette, and then by comparing the luminance of a white object included in the luminance of the object with the luminances of a white object included with the luminances of the colors of the palette.

**8.** Apparatus for determining the color of a translucent object, such as a tooth in the mouth, for example, the apparatus comprising a source (20) of polychromatic light associated with an optical system (22) for illuminating the object (24), an optical system (26) for picking up light diffused by the object, a spectrometer (28) receiving said light, photodetectors (30) disposed at the output from the spectrometer, and an analog-to-digital converter (24) connecting the photodetectors to a data processor system (36) such a a microcomputer, the apparatus being characterized in that the spectrometer and the photodetectors are designed to detect the reflectance of the object (24) at wavelengths corresponding essentially to the maxima in the sensitivity of the human eye to hue and to saturation, and in that the data processor system (36) has means for determining, on the basis of said reflectance measurements, a transparency restitution indicator for the object (24) together with a saturation percentage of its color as seen by the human eye and the pigmentations of said color relative to white over predetermined wavelength ranges.

**9.** Apparatus according to claim 8, characterized in that the spectrometer (28) and the photodetectors (30) are designed to detect the reflectance of the object (24) at wavelengths substantially equal to 440 nm, 495 nm, 520 nm, 577 nm, and 600 nm.

**10.** Apparatus according to claim 8 or 9, characterized in that the data processor system (36) has means for determining the saturation percentage of the color of the object and the pigmentations of said color relative to white for a determined standard illuminant such as the standardized diffuse illumination of sunlight.

11. Apparatus according to any one of claims 8 to 10, characterized in that the values of saturation percentage, of pigmentation, and of white luminance for colors in a palette as measured under the same conditions as the color of the object are recorded in a memory (40) of the data processor system, which system has means for comparing sequentially and in order: the saturation percentage of the color of the object with the saturation percentages of the colors of the palette as recorded in the memory, then the pigmentations, and finally the white luminances, thereby determining the color in the palette which is closest to the color of the object, or the pigments to be added to a determined color to obtain the color of the object.

FIG.1

FIG.2

FIG.3

FIG.4

FIG.5